# EUROPEAN PATENT SPECIFICATION

(11) **EP 4 018 400 B1**
(45) Date of publication and mention of the grant of the patent: **01.07.2026**
(21) Application number: 20854565.7
(22) Date of filing: 19.08.2020
(51) Int. Cl.: G06Q 10/08, G06Q 10/0831, G06Q 10/0833, G06Q 50/26

(54) **SYSTEMS AND METHODS FOR NON-STOP SHIPMENT ACROSS BORDER**
SYSTEME UND VERFAHREN ZUR GRENZÜBERSCHREITENDEN NON-STOP-LIEFERUNG
SYSTÈMES ET PROCÉDÉS D'ACHEMINEMENT ININTERROMPU TRANSFRONTALIER

(30) Priority: 20.08.2019 US 201962889048 P
(43) Date of publication of application: 29.06.2022
(73) Proprietor: Bowen Capital Group Limited, Hong Kong (HK)
(72) Inventor: HENDERSON, Shaun, Hong Kong (HK)
(74) Representative: Cabinet Chaillot
(86) International application number: PCT/CN2020/109938
(87) International publication number: WO 2021/032107

(56) References cited:
- WO-A1-2014/006643
- CN-A- 101 027 690
- CN-A- 104 866 971
- US-A1- 2010 138 355
- US-A1- 2013 013 528
- US-A1- 2016 026 973
- US-A1- 2016 371 643
- HEILIG LEONARD ET AL: "Information systems in seaports: a categorization and overview", INFORMATION TECHNOLOGY AND MANAGEMENT, SPRINGER US, BOSTON, vol. 18, no. 3, 1 November 2016 (2016-11-01), pages 179 - 201, XP036315638, ISSN: 1385-951X, [retrieved on 20161101], DOI: 10.1007/S10799-016-0269-1
- ANONYMOUS: "National Single Window Guidelines", 24 April 2015 (2015-04-24), pages 1 - 41, XP093058050, Retrieved from the Internet <URL:https://transport.ec.europa.eu/system/files/2017-06/national_single_windows_guidlines.pdf> [retrieved on 20230627]
- HOFFMAN ALWYN J ET AL: "A combined GPS/RFID system for improved cross-border management of freight consignments", 2013 AFRICON, IEEE, 9 September 2013 (2013-09-09), pages 1 - 8, XP032574713, ISSN: 2153-0025, ISBN: 978-1-4673-5940-5, [retrieved on 20140305], DOI: 10.1109/AFRCON.2013.6757841
- RATNAYKE RAVI ET AL: "SINGLE WINDOW PLANNING AND IMPLEMENTATION GUIDE", 1 January 2012 (2012-01-01), pages 1 - 103, XP093057919, Retrieved from the Internet <URL:https://www.unescap.org/sites/default/files/0%20-%20Full%20Report_5.pdf> [retrieved on 20230626]

## Description

### FIELD OF INVENTION

This invention relates to methods and systems for tracking shipments crossing a border.

### BACKGROUND OF INVENTION

A typical process for international shipping involves crossing a border where a freight carrier is physically stopped at customs for the government agencies to review documentation relating to the shipment and conduct an inspection if necessary.

An enormous quantity of freight crosses such international borders on a daily basis. Most of them are from legitimate sources which do not require full inspection. However, all freight carriers still need to stop at a physical checkpoint when crossing the border. This creates unnecessary delay for freight shipments.

Accordingly, there is a need for new systems and methods that facilitate freight shipments across borders more efficiently.

### SUMMARY OF INVENTION

In light of the foregoing background, the present invention provides a system for monitoring shipment from a shipper to a consignee by a carrier vehicle crossing a border according to claim 1.

The present invention also provides a method executed in a computer system for monitoring shipment from a shipper to a consignee by a carrier vehicle crossing a border according to claim 6.

The present invention further provides, not part of the claimed invention, a computer system for monitoring shipment from a shipper to a consignee by a carrier crossing a border under the supervision of an agency comprising (1) a processor; (2) a non-transitory computer-readable storage medium having stored thereon instructions that when executed causes the processor to (a) receive, by the computer system, shipment information from the shipper; (b) receive, by the computer system, shipment data uploaded by the carrier; (c) record, by the computer system, an attribute that can uniquely identify the carrier; (d) acquire, by a positioning device on the carrier, the geographic position of the carrier; (e) receive, from a recognition device located near the border, the attribute of the carrier and the timestamp indicating the time the carrier passing through a border; (f) close, by the computer system, a shipment record upon receipt of a confirmation from the consignee, wherein the agency can access all information in the computer system for monitoring the shipment at any time, wherein the carrier crosses the border without the need of stopping, and wherein the border and the agency are geographically separated.

### BRIEF DESCRIPTION OF FIGURES

Fig. 1 is a system diagram for shipment across a border in accordance with an example embodiment.
Fig. 2 is an information exchange diagram for shipment across a border in accordance with another example embodiment.
Fig. 3 is a method for shipment across a border in accordance with an example embodiment.
Fig. 4A-J are software interfaces in accordance with an example embodiment.

### DETAILED DESCRIPTION OF THE PREFERRED EMBODIMENTS

Example embodiments relate to systems and methods that incorporate information from all parties in one platform to facilitate logistics for international shipment.

As used herein, "proof of delivery (POD)" is a confirmation to the fact that the consignee received the freight from the shipper.

As used herein, "an agency" refers to one or more agency, or at least one agency. In one embodiment, it may be a government agency.

As used herein, "mode of carriage" refers to modes of transport used in the movement, delivery or transportation of goods including, but not limited to, aircraft, barges, boats, cars, containers, lorries, tankers, trucks, ships, rail carriage and vans.

Traditional cargo shipments across national borders involve the process of customs clearance. Typically, countries elect checkpoints at the border and cargo trucks must stop for inspection. The truck driver needs to present documents about the cargo to the customs officer for verification. This is a time-consuming process, and during rush hour, it creates traffic jams which can cause further delays. Approximately 80% of all over-the-road shipping data, manifests, Bills of Lading (BOL) etc. are paper copies in duplicate or triplicate. This is not environmentally friendly. Besides, hard copies can easily be manipulated, which is another contributor to fraud and theft.

Example embodiments eliminate the tedious processes of passing the shipping documents from party to party for update, inspection and approval. All data are captured on a single platform that can only be accessed with a secure login. No hard copies are required, thus reducing substantial costs on stationary and printing, and hence significantly reducing carbon footprint.

Example embodiments include a method that can be operated on various operation systems, which allows visibility for shippers, consignees, and government agencies to access the freight information and transactions according to their access right. Example embodiments consolidate multiple platform data into one single unified view, which can be implemented on any computer or mobile device and does not require special hardware.

Example embodiments enable shipment across international boundaries or borders without having to physically stop at a border checkpoint. Therefore, fixed customs checkpoints are no longer needed. Customs officers may be deployed further 'inland' to perform the inspections, and alert mobile patrol officers instantly if any irregularities or suspicious shipments appear, thus delivering significant efficiency and process improvement for the international borders.

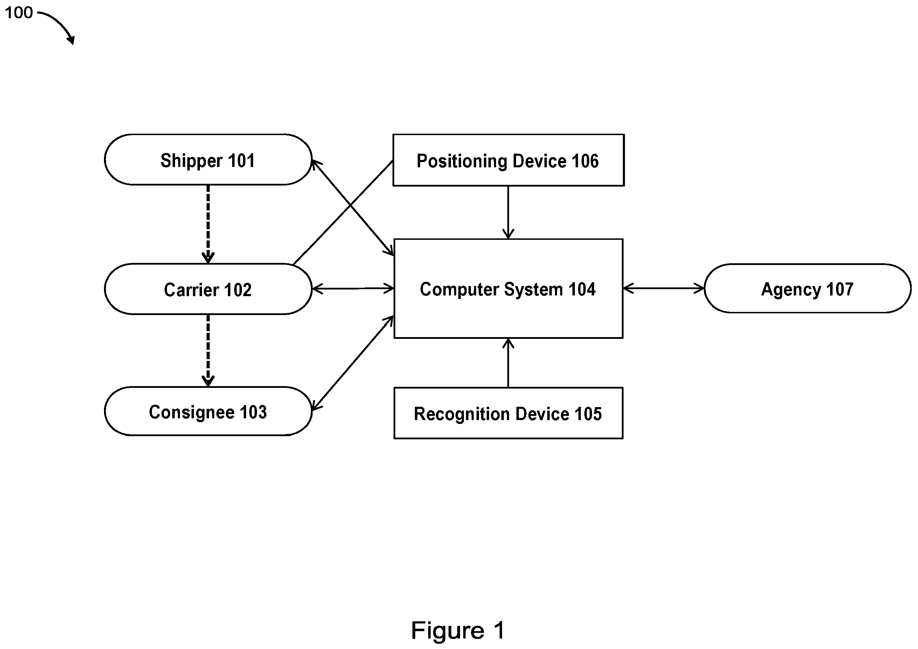

Fig. 1 shows a system 100 for monitoring shipment from a shipper 101 to a consignee 103 by a carrier 102 crossing a border under the supervision of an agency 107 in accordance with an example embodiment. The solid lines refer to the flow of data, whereas the broken lines refer to the flow of goods.

The system 100 includes a positioning device 106 on the carrier that discloses a geographical position of the carrier during the shipment, a recognition device 105 installed at a pre-determined location near the border for recognizing an attribute that can uniquely identify the carrier and record a timestamp when the carrier passes through the recognition device, and a computer system 104 that interconnects with the corresponding data processing systems of the shipper 101, the carrier 102, the consignee 103 and the agency 107 by a digital network.

**In** one example embodiment, the computer system 104 receives shipping data comprising the information of the shipment from the shipper 101 and the carrier 102, the geographical position of the carrier 102 from the positioning device 106, the timestamp from the recognition device 105 and stores the data in its internal database for the agency 107, the shipper 101, the carrier 102 and the consignee 103 to retrieve at any time such that the shipment is monitored and recorded for the entire shipping process, wherein the carrier 102 crosses the border without the need for stopping, and wherein the border and the agency 107 are geographically separated.

In some example embodiments, the shipping data further comprises the identities of the shipper 101, the carrier 102, the consignee 103 and the shipment. In one example embodiment, the identity of the carrier 102 includes a license plate number, a name of a driver, and/or the driver's license number.

In one example embodiment, the geographical separation is a large distance. In some embodiments, the large distance is a distance in which the carrier 102 needs a non-trivial amount of time to travel. In some embodiments, the large distance is between one and one hundred yards or meters, or between one and one hundred kilometers or miles, between the border and the agency 107. For the sake of clarity, "between one and one hundred" includes one, one hundred, and each number in between.

In one example embodiment, the positioning device 106 is a device that can receive geographic positioning information from Global Positioning System (GPS), Global Navigation Satellite System (GLONASS), GALILEO, BeiDou Navigation Satellite System (BDS) devices, or any combination thereof.

In one example embodiment, the position data is collected from the positioning device 106 and/or other mobile devices and uploaded to the computer system 104 providing approved users and agencies 107 with date/time and location of the vehicle and goods. The uploaded data is to be matched to the relevant shipping information on the computer system 104. The computer system 104 is monitored with proprietary Artificial Intelligence (AI) / Machine Learning (ML) algorithms flagging any anomalies such as the mode of carriage changing direction, route, stopped or crossing a border at another location.

In one example embodiment, the computer system 104 allows all agencies 107 to add comments, instructions or notes to the shipment which is archived when a shipment record is closed. If any agency 107 stops a vehicle for inspection or any other reason, details of the stop and the inspection point will be entered onto the computer system 104 and archived with the shipment data.

**In** one example embodiment, the agency 107 includes, but not limited to, Department of Transportation (DoT), Road Safety Authority (RSA) European Transport Safety Council (ETSC), any relevant Road and Transport agencies or bodies, Customs, Customs & Excise, Customs and Border Patrol, any agency charged with managing the import and export of goods, Fire Departments, Fire Service, Emergency Services, Law Enforcement, or other government agencies.

**In** one example embodiment, the level of access to the computer system 104 including administrator rights etc. of agencies can be customizable upon request to allow for supervision and management controls.

**In** one example embodiment, the computer system 104 allows a multiple access by a plurality of the agency 107, the shipper 101, the carrier 102 and the consignee 103 to view and monitor the movement of goods and modes of carriage that is transporting goods. The agencies can communicate instructions, directions or comments and/or close out the shipment via the computer system 104.

In one example embodiment, the shipper 101, the carrier 102, the consignee 103 and the agency 107 can communicate and leave comments via the computer system 104.

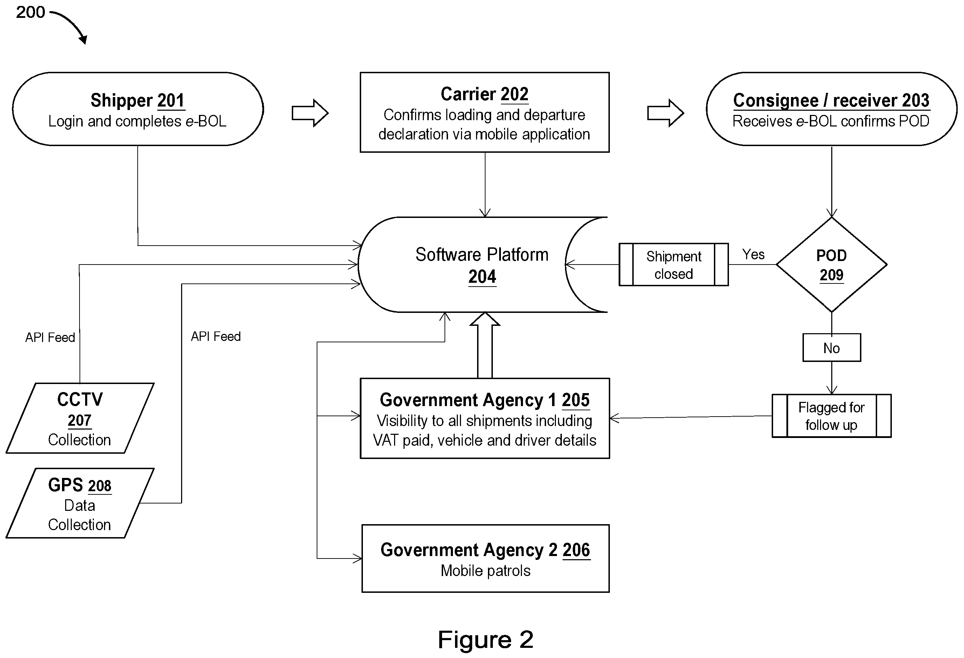

Fig. 2 shows a system 200 for shipment across a border in accordance with an example embodiment.

The system 200 includes a software platform 204, a closed circuit television (CCTV) 207 and a global positioning system (GPS) device 208. The CCTV 207 and the GPS device 208 are connected with the software platform 204 and provide the collected data to the software platform 204. The CCTV 207 is installed at the key borders to monitor the time and position that the carrier 202 crosses the border. The GPS device 208 is physically located at the carrier 202 so that the position of the carrier 202 is tracked. A shipper 201, a carrier 202, a consignee/receiver 203 and government agencies 205 and 206 can communicate directly with the software platform 204.

In one example embodiment, each party of the shipper 201, the carrier 202, the consignee/receiver 203 and government agencies 205 and 206 has their own username and password for logging into the software platform 204 and each party has a pre-determined list of access rights to access the data in the software platform 204.

When a shipper receives an order of shipment to a consignee, the shipper will engage a carrier to transport the goods thereto. The shipper 201 can login into the software platform 204 to fill in the shipping application, or e-bill of landing (eBOL), and open a case number in the software platform 204. The eBOL provides an electronic platform replacing the paper process. The shipper 201, including the warehouse operations or logistics staff, can access the eBOL to amend or add information including images and scan data. The shipper 201 have access right to their complete transactions including archived data.

The carrier 202 is assigned to transport the shipment by a driver. The driver can access the software platform 204 using secure login features, pull shipment data, and add additional details regarding the shipment to be saved in the software platform 204. For example, the driver can access the software platform 204 via a mobile device, and upload required images that is captured by the mobile device. When the driver of the carrier 202 confirms the shipment data is correct, the driver signs a declaration electronically and submits the same to software platform 204.

The GPS device 208 is connected with the software platform 204 and enables tracking of the position of the carrier via API feed when the shipment is in transit. The GPS device 208 is activated by the driver of the carrier 202 at departure. An alert is sent to the government agencies 205 and the consignee 203 upon the departure of the carrier.

The government agencies 205 and 206 have access right to all the data including transactions and archives stored in the software platform 204, including full visibility on shipment contents, agency points as well as whether import taxes, duties or levies have been paid by the shipper. The government agencies 205 and 206 can further communicate with the carrier 202 and send messages or instructions such as inspection points or locations thereto via the software platform 204. All communications with the government agencies 205 as well as inspection reports of mobile patrols 206, and driver's acknowledgement are saved in the software platform 204.

In one example embodiment, the government agencies 205 and 206 can communicate with the shipper 201, the carrier 202 and the consignee 203 via the software platform 204. The government agencies include Customs, the border patrols, and other border inspection related agencies, Department of Transportation (DoT), Road Safety Authority (RSA) European Transport Safety Council (ETSC), any relevant Road and Transport agencies or bodies, Customs & Excise, any agency charged with managing the import and export of goods, Fire Departments, Fire Service, Emergency Services, Law Enforcement, or other government agencies. The level of access including administrator rights etc. of government agencies can be customizable upon request to allow for supervision and management controls.

The CCTV 207 is used to capture images of the carrier 202 when the carrier 202 goes through the border. By way of example, the CCTV 207 is installed at a pre-determined location near the border, which captures images of all passing vehicles and sends the images to a recognition module (not shown). From the images, the recognition module further recognizes an attribute that can uniquely identify the carrier 202, for example, the license number of the carrier 202, and record the timestamp when the carrier passes by. The images, attributes and timestamps are stored in the software platform 204.

In one example embodiment, a recognition device which includes at least a CCTV, a camera, or other information acquiring equipment installed at a pre-determined location near the border. The recognition device further includes a recognition module for extracting one or more attributes that can uniquely identify the carrier. The recognition module can be included in the software platform 204 or other computers that connected with the software platform 204 by network. The recognition device captures images of the carrier 202 when the carrier 202 passes by, recognize the carrier 202 and record the timestamp that the carrier passes by.

The consignee / receiver 203 receives the eBOL and confirms proof of delivery (POD) 209 on the software platform 204. When POD 209 is received, the software platform 204 closes out the shipment case. Otherwise, the shipment is flagged for follow up in the government agencies 205. Consignee 203 also can view their freight deliver and archived delivery receipts on the software platform 204.

In one example embodiment, the consignee 203 can transmit delivery and reconciliation data to the shipper 201, a seller, a freight forwarder, the carrier 202 or relevant agencies including Customs.

In an example embodiment, the software platform 204 receives and stores thereon information, including captured images of the carrier 202 (which shows number plate, colour, livery etc.), driver and license details, number plates / license plates and other identification or markings for the carrier 202, locations tracking of the carrier 202, bar code scans, QR codes and freight labels, Near Field Communications (NFC) tag scanning and saving, etc.

In one example embodiment, the software platform 204 is a cloud based platform.

In one example embodiment, the software platform 204 resides on a computer system.

In an example embodiment, all data are consolidated onto the software platform and a dashboard permits a tiered approved access. Data on the software can be configured for customized viewing or reporting purposes such as delivery location, by carrier, by driver, by product etc.

The advantages of the system 200 is the ability for multiple parties to input and retrieve data and communicate through a single unified platform throughout the shipping process, thus providing end-to-end visibility and transparency on domestic and international freight transportation or shipment. The communication between all parties can be achieved via messaging systems available on mobile devices such as smart phones or tablets. The system 200 allows for the smooth flow of traffic at major border intersections or crossing points while capturing the exact time of import/export. It provides a complete POD of shipment, reduces fraud or theft. Furthermore, the system 100 is cost savings and reduces carbon footprint.

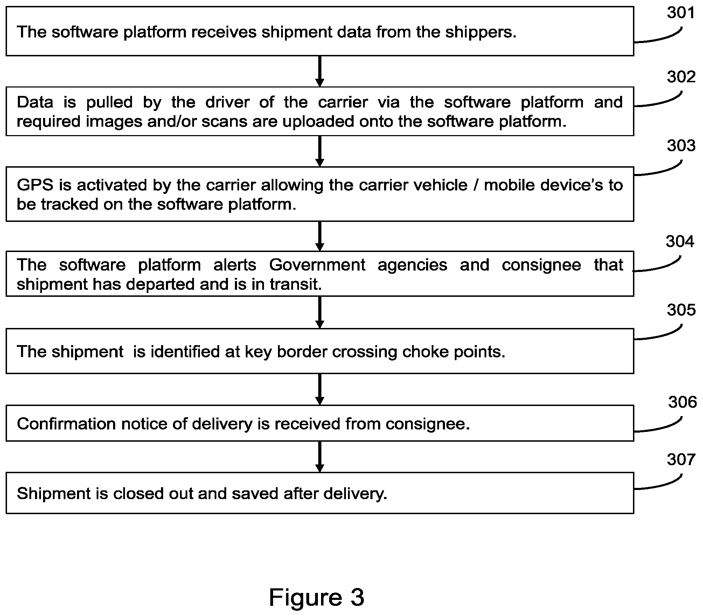

Fig. 3 is a method for shipment across a border in accordance with an example embodiment.

Block 301 states the software platform receives shipment data from the shippers.

By way of example, the shipper has a username and password for login into the software platform and a case number is created on the software platform for the shipping. Shipping data is entered to the software platform by the shippers. For example, back office logistics staff enter the shipping manifest data onto the software platform entering all required information onto the BOL from a computer or mobile device. Warehouse operations or logistics staff can access the software platform and can amend or add information including images or scan data.

Block 302 states data is pulled by the driver of the carrier via the software platform and required images and/or scans are uploaded onto the software platform.

By way of example, the driver assigned to transport the freight has a username and password for logging into the software platform and accessing the case by the case number. For example, the driver accesses the software platform via a mobile device using secure login features. The driver can then add or mark additional details to the software platform regarding the shipment, which is saved to the software platform.

By way of example, the driver signs and/or submits documents on the software platform prior to departure. Once the driver submits the data, it updates the platform to show that the shipment is in transit. Data indicating the shipment has departed and in transit are submitted to the software platform.

Block 303 states GPS is activated by the carrier allowing the carrier vehicle / mobile device's position to be tracked on the software platform.

By way of example, the driver of the carrier vehicle enables GPS tracking on the software application, which sends positioning information to the software platform so that the real-time location of the carrier vehicle / mobile device is tracked and stored on the software platform. The carrier's real-time position or its past trajectory can then be monitored by all other parties in accordance with local privacy laws. In one embodiment, the GPS device is a mobile device such as the driver's or freight carrier company's mobile phone.

Block 304 states the software platform alerts government agencies and consignee that shipment has departed and is in transit.

By way of example, the alert to customs will indicate the intended border crossing point of the shipment. Customs are also notified if duties or taxes have been paid. Customs has the ability to communicate directly with the shipper and/or driver through the platform so that they can issue instructions such as checkpoint requirements or confirm inspection location etc. A report format of all communications, check points or inspections is available with the ability to upload images or footage.

Block 305 states the shipment is identified at key border crossing choke points.

By way of example, Automatic Number Plate Recognition (ANPR) CCTV systems are installed at the key borders and are integrated with the software platform through an Application Programming Interface (API) feed. The CCTV system takes a picture of every vehicle passing its camera view. When a number plate / license plate is identified on the ANPR CCTV system, it will send the data via API to the software platform where it is matched with the eBOL data. The date/time stamp and image of the border crossing will be attached to the eBOL. ANPR image complete with date/time stamp will be automatically attached to the overall eBOL / report on the software platform. Government agencies can view the time a shipment crosses the border near real time.

In one example embodiment, any anomalies in terms of location, time or vehicle data are automatically flagged and alerts relevant personnel or authorities.

In another example embodiment, the date/time stamp and images of the vehicle crossing a border, arriving or departing at a port, yard or terminal are captured and attached to the software platform.

Government agencies have full access right to the shipping data, so that they can have all information at hand before they stop or inspect the shipment. i.e. vehicles details, driver details and manifested freight as well as whether the correct amount of value added tax (VAT) or duty has been paid. Additionally, should a shipper or freight carrier be found in breach of government regulations or laws, government agencies can append the data to their report that is captured on the software. Fixed fines or penalties can be added to the report and the shipper and carrier companies will be notified.

Block 306 states confirmation notice of delivery is received from consignee.

By way of example, the consignee or receiver also has access to software platform through secure login. The consignee's visibility within the platform will be limited to shipment details only, as well as other information such as the estimated time of arrival or some other relevant information.

The consignee can send a message to the shipper and/or driver providing specific delivery instructions or directions. This is especially important for the delivery of fuel, chemicals or hazardous materials. Consignee can communicate to the driver directly with delivery instructions, such as pot numbers for oil or chemicals or dock doors etc.

The consignee will confirm delivery upon receipt of the shipment and may add notes such as damage, freight count etc. The driver will unload/deliver the freight and close out the delivery on the software platform via the mobile device.

**In** one example embodiment, the software platform confirms the goods are delivered in accordance with import declarations, import documents and associated import duties, levies and/or taxes.

**In** another example embodiment, the software platform consolidates goods declared and delivered and provides Customs with electronic evidence.

**In** one example embodiment, the consignee confirms receipt of goods via the software application. The consignee can enter additional information such as shortage, overage or damaged goods. The consignee can add images of the goods. For applicable deliveries, Customs or other relevant government agencies will be automatically notified. The software platform automatically consolidates the shipment data against the delivery data and flags anomalies for follow up inspections or confirmations. If the goods are flagged for follow up, Customs, other government agencies, or mobile patrols can access the data and conduct follow up inspections.

Block 307 states shipment is closed out and saved after delivery.

Once delivery is confirmed and closed, relevant parties, shipper, government agencies etc. can see that the shipment is completed, and the case number is closed. All data including communications between all parties is captured onto the software platform and archived after delivery.

By way of example, the entire transaction is stored on a block chain.

The method provides full visibility of end-to-end logistics information including cross border (export / imports) data for customs and government agencies, such as shipper details, freight carrier details, driver information, vehicle details, date/time of border crossing (or yard entry/departure), taxes or duty owed and paid, customs approval (or denial), and POD receipt. The government agencies such as customs or border patrol can login to the platform and detect where the shipment is located and proceed to that area for any inspections or checks, so that they are not required to be located at the border and can remain flexible and mobile. As a result, the freight vehicles need not to physically stop and clear customs at designated border crossing points, either.

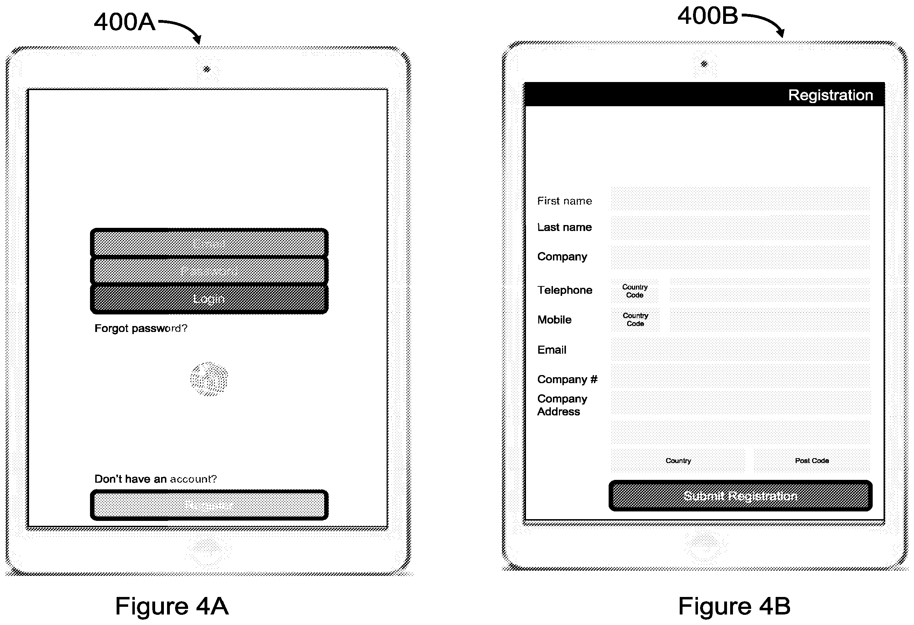

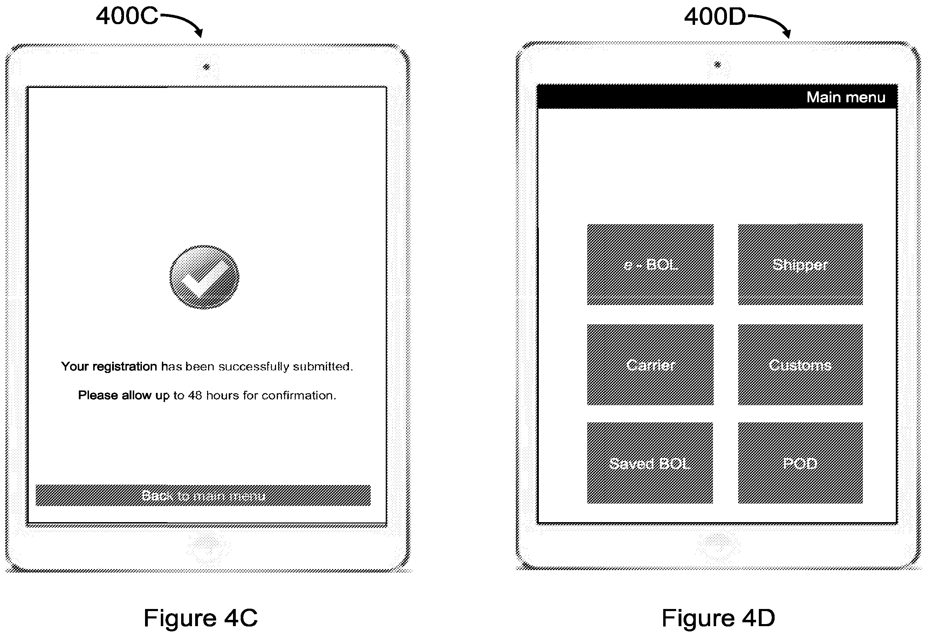

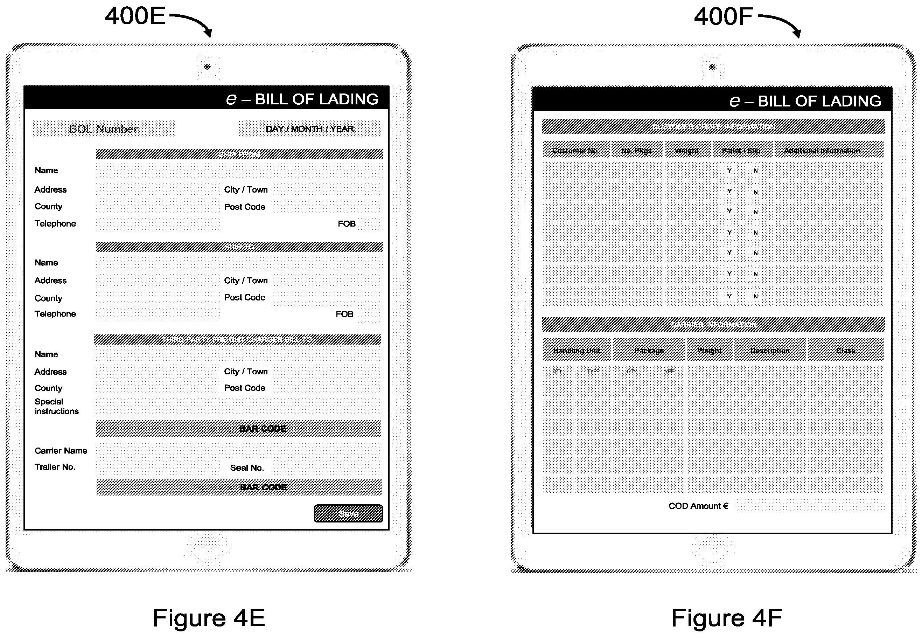

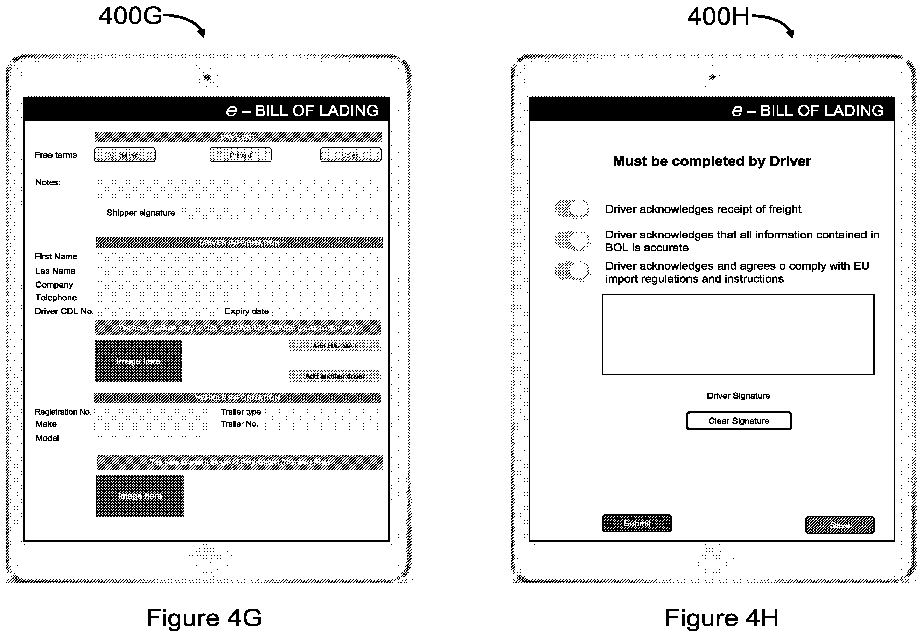

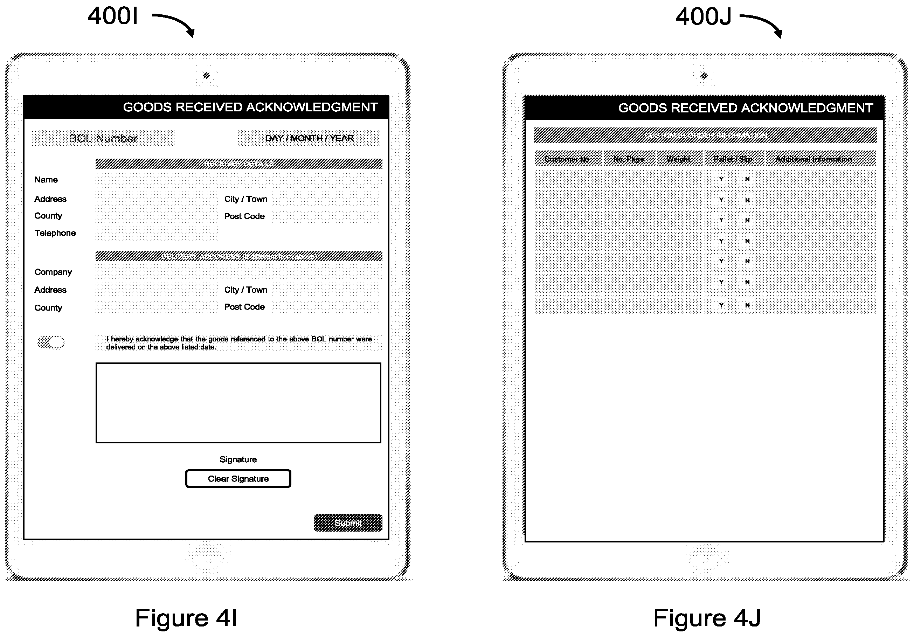

Fig. 4A-4J are software interfaces in accordance with an example embodiment.

The software interfaces includes a login interface 400A and a registration interface 400B, where an account associated with a login name and a password can be created, as shown in Figures 4A and 4B. A notification shows in the interface 400C indicating the status of registration information submission. After successful registration, the user can login the software platform with the login name and password and access the main menu 400D, which includes access choices of for the e-BOL, the shipper, the carrier, the customs, the saved BOL and the POD.

The software platform interfaces 400E, 400F are exemplary embodiment for inputting general information of the shipment or eBOL. It includes the company information of the shipper, the consignee, and the third party, such as the name, address, country, post code, contact information and the instructions from the third party. It also includes information acquired by scanning bar code of the carrier or the freight, such as the trailer number, seal number etc. Further, it includes the freight description information from the customer order and the carrier.

The user interface 400G in Fig. 3G is for inputting payment information and driver's information, and carrier vehicle information. For example, the driver's information includes the driver's name and company, driver's license or commercial driver's license (CDL) number, license expiration date, contact number etc. The vehicle's information includes the registration number, trailer type, number and license plate, lock code for trailer, model of the vehicle, department of transportation (DOT) number or other government agency number. The shipper and the driver can sign with an electronic signature and upload the required images, such as the image of the driver's license and the photo ID, the image of the vehicle's registration plate, and the images of the tractor plate etc.

The software platform further includes an exemplary embodiment of a user interface 400H that is an acknowledgement questionnaire to be completed by the driver. The e-sign feature enables the driver to sign directly and electronically on the interface 400H.

The interfaces 400I and 400J are for the consignee / receiver to input goods received acknowledgement. For example, the interfaces 400I includes the receiver's details such as name, address, telephone number and the deliver's company and address etc. The interfaces 400J includes the confirmation of the receipt of the goods that is ordered.

In other example embodiments, the software may include other interfaces for acquiring the required data, images and scans and pushes the acquired information to the server.

The system and method of the present disclosure may be implemented in the form of a software application running on a computer system. Further, portions of the methods may be executed on one such computer system, while the other portions are executed on one or more other such computer systems. Examples of the computer system include a mainframe, personal computer, handheld computer, server, etc. The software application may be stored on a recording media locally accessible by the computer system and accessible via a hard wired or wireless connection to a network, for example, a local area network, or the Internet.

The computer system may include, for example, a processor, random access memory (RAM), a printer interface, a display unit, a local area network (LAN) data transmission controller, a LAN interface, a network controller, an internal bus, and one or more input devices, for example, a keyboard, mouse etc. The computer system can be connected to a data storage device.

Blocks and/or methods discussed herein can be executed and/or made by a user, a user agent, a software application, an electronic device, a computer, firmware, hardware, a process, a computer system, and/or an intelligent personal assistant. Furthermore, blocks and/or methods discussed herein can be executed automatically with or without instruction from a user.

The exemplary embodiments of the present invention or the systems and methods for non-stop shipment across a border can be used as part of a larger supply chain management system.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

Methods discussed within different figures can be added to or exchanged with methods in other figures. Further, specific numerical data values (such as specific quantities, numbers, categories, etc.) or other specific information should be interpreted as illustrative for discussing example embodiments. Such specific information is not provided to limit example embodiment.

## Claims

1. A system for monitoring shipment from a shipper (201) to a consignee (203) by a carrier vehicle (202) crossing a border under the supervision of a first agency (205) and a second agency (206), comprising:
a positioning device (208) positioned on the carrier vehicle (202) that discloses a geographical position of the carrier vehicle (202) during the shipment;
a recognition device (207) installed at a pre-determined location at the border for recognizing a license plate and record a timestamp when the carrier vehicle (202) passes through the recognition device (207); and
a computer system (204) that is configured to interconnect with the corresponding data processing systems of the shipper (201), the carrier vehicle (202), the consignee (203), the first agency (205) and the second agency (206) by a digital network;
wherein the first agency (205) is a government agency and the second agency (206) is a mobile patrol officer;
wherein the mobile patrol officer is capable of receiving the shipping data from the computer system, wherein upon receiving instruction from the first agency, the mobile patrol officer can track the carrier vehicle (202) and stop it from proceeding;
wherein the computer system is configured to interconnect with the corresponding data processing systems of a plurality of the government agencies, wherein the plurality of the government agencies can communicate with each other through the computer system;
wherein the computer system:
receives shipping data comprising:
the shipment data from the shipper (201) and the carrier vehicle (202),
the geographical position of the carrier vehicle from the positioning device (208), and
the license plate and the timestamp from the recognition device (207);
matches the license plate with the shipment data and attaches the timestamp to the shipment data;
stores the shipment data in a shipment record in an internal database;
archives the shipment record upon receipt of a confirmation from the consignee (203);
flags any anomalies automatically using proprietary Artificial Intelligence (AI) / Machine Learning (ML) algorithms and alerts the first agency (205) of the anomalies;
wherein the shipping data can be retrieved at any time by the first agency (205), the shipper (201), the carrier vehicle (202) and the consignee (203), and the shipment is monitored and recorded for entire shipping process,
such that the carrier vehicle (202) is able to cross the border without the need for stopping,
wherein the border and the first agency (205) are geographically separated.

2. The system according to claim 1 wherein the first agency (205) is capable of sending instructions through the computer system to the carrier vehicle (202) to instruct the carrier vehicle (202) to move to a specific inspection point.

3. The system according to claim 1 wherein the first agency (205) is capable of issuing a summons to the shipper (201) or carrier vehicle (202) through the computer system (204) if they are found in breach of government laws, wherein the summons document is stored in the computer system and delivered to the offending party.

4. The system according to claim 1 wherein the consignee (203) is capable of a) sending a delivery instruction to the carrier vehicle (202) through the computer system; and b) sending a receipt confirmation of the shipment through the computer system to the first agency (205), the shipper (201), or the consignee (203).

5. The system according to claim 1 wherein the recognition device (207) comprises a car licensing plate recognition system comprising a camera that captures an image of the license plate of the carrier vehicle (202) for analyzing.

6. A method executed in a computer system for monitoring shipment from a shipper (201) to a consignee (203) by a carrier vehicle (202) crossing a border under the supervision of a first agency (205) and a second agency (206),
wherein the computer system is configured to interconnect with the corresponding data processing systems of the shipper (201), the carrier vehicle (202), the consignee (203), the first agency (205) and the second agency (206) by a digital network;
wherein the first agency (205) is a government agency and the second agency (206) is a mobile patrol officer;
wherein the mobile patrol officer is capable of receiving the shipping data from the computer system, wherein upon receiving instruction from the first agency, the mobile patrol officer can track the carrier vehicle (202) and stop it from proceeding;
wherein the computer system is configured to interconnect with the corresponding data processing systems of a plurality of the government agencies, wherein the plurality of the government agencies can communicate with each other through the computer system;
the method comprising:
receiving, by the computer system, shipment data from the shipper (201);
receiving, by the computer system, shipping data uploaded by the carrier vehicle (202);
recording, by the computer system, a license plate;
acquiring, by a positioning device (208) positioned on the carrier vehicle (202), the geographic position of the carrier vehicle (202);
receiving, from a recognition device (207) located at the border, the license plate of the carrier vehicle (202) and a timestamp indicating the time the carrier vehicle (202) passes through the border;
matching the license plate with shipment data and attaching the timestamp to the shipment data;
archiving, by the computer system, a shipment record upon receipt of a confirmation from the consignee (203) ;
flagging, by the computer system, any anomalies automatically using proprietary Artificial Intelligence (AI) / Machine Learning (ML) algorithms; and alerting the first agency (205) of the anomalies;
wherein the shipping data can be retrieved at any time by the first agency (205), the shipper (201), the carrier vehicle (202) and the consignee (203), and the shipment is monitored and recorded for entire shipping process,
such that the carrier vehicle (202) is able to cross the border without the need for stopping,
wherein the border and the first agency (205) are geographically separated.

7. The method according to claim 6 wherein the first agency (205) is capable of sending instructions to the carrier vehicle (202) through the computer system to instruct the carrier vehicle (202) to move to a specific inspection point.

8. The method according to claim 6 wherein the first agency (205) is capable of issuing a summons to the shipper (201) or carrier vehicle (202) if they are found in breach of government laws, wherein the summons document is stored in the computer system and delivered to the offending party.

9. The method according to claim 6 wherein the consignee (203) is capable of a) sending a delivery instruction to the carrier vehicle (202) through the computer system; and b) sending a receipt confirmation of the shipment through the computer system to the first agency (205), the shipper (201), or the consignee (203).

## Patentansprüche

1. - System zum Überwachen eines Versands von einem Spediteur (201) zu einem Warenempfänger (203) durch ein Trägerfahrzeug (202), das unter der Aufsicht einer ersten Behörde (205) und einer zweiten Behörde (206) eine Grenze überquert, umfassend:
eine Positionierungsvorrichtung (208), die an dem Trägerfahrzeug (202) positioniert ist und während des Versands eine geografische Position des Trägerfahrzeugs (202) offenlegt;
eine Erkennungsvorrichtung (207), die an einer vorbestimmten Stelle an der Grenze installiert ist, zum Erkennen eines Kennzeichens und zum Aufzeichnen eines Zeitstempels, wenn das Trägerfahrzeug (202) die Erkennungsvorrichtung (207) durchfährt; und
ein Computersystem (204), das konfiguriert ist, um über ein digitales Netz mit den entsprechenden Datenverarbeitungssystemen des Spediteurs (201), des Trägerfahrzeugs (202), des Warenempfängers (203), der ersten Behörde (205) und der zweiten Behörde (206) verbunden zu sein;
wobei die erste Behörde (205) eine Regierungsbehörde ist und die zweite Behörde (206) ein mobiler Patrouillenbeamter ist;
wobei der mobile Patrouillenbeamte in der Lage ist, die Versanddaten von dem Computersystem zu empfangen, wobei der mobile Patrouillenbeamte nach Erhalt einer Anweisung von der ersten Behörde das Trägerfahrzeug (202) verfolgen und an der Weiterfahrt hindern kann;
wobei das Computersystem konfiguriert ist, um über ein digitales Netz mit den entsprechenden Datenverarbeitungssystemen einer Vielzahl von Regierungsbehörden verbunden zu sein, wobei die Vielzahl von Regierungsbehörden über das Computersystem miteinander kommunizieren kann;
wobei das Computersystem:
Versanddaten empfängt, umfassend:
die Versanddaten von dem Spediteur (201) und dem Trägerfahrzeug (202),
die geografische Position des Trägerfahrzeugs von der Positionierungsvorrichtung (208), und
das Kennzeichen und den Zeitstempel von der Erkennungsvorrichtung (207);
das Kennzeichen mit den Versanddaten abgleicht und den Zeitstempel an die Versanddaten anhängt;
die Versanddaten in einem Versanddatensatz in einer internen Datenbank speichert;
den Versanddatensatz nach Erhalt einer Bestätigung von dem Warenempfänger (203) archiviert;
Anomalien automatisch unter Verwendung proprietärer Algorithmen künstlicher Intelligenz (KI) / maschinellen Lernens (ML) kennzeichnet und die erste Behörde (205) über die Anomalien alarmiert;
wobei die Versanddaten jederzeit von der ersten Behörde (205), dem Spediteur (201), dem Trägerfahrzeug (202) und dem Warenempfänger (203) abgerufen werden können, und der Versand für den gesamten Versandprozess überwacht und aufgezeichnet wird,
sodass das Trägerfahrzeug (202) die Grenze überqueren kann, ohne anhalten zu müssen,
wobei die Grenze und die erste Behörde (205) geografisch getrennt sind.

2. - System nach Anspruch 1, wobei die erste Behörde (205) in der Lage ist, über das Computersystem Anweisungen an das Trägerfahrzeug (202) zu senden, um das Trägerfahrzeug (202) anzuweisen, sich zu einem bestimmten Inspektionspunkt zu bewegen.

3. - System nach Anspruch 1, wobei die erste Behörde (205) in der Lage ist, dem Spediteur (201) oder dem Trägerfahrzeug (202) über das Computersystem (204) eine Vorladung zuzustellen, wenn festgestellt wird, dass diese gegen Regierungsgesetze verstoßen, wobei das Vorladungsdokument in dem Computersystem gespeichert und der zuwiderhandelnden Partei zugestellt wird.

4. - System nach Anspruch 1, wobei der Warenempfänger (203) zu Folgendem in der Lage ist,
a) Senden einer Lieferanweisung über das Computersystem an das Trägerfahrzeug (202); und
b) Senden einer Empfangsbestätigung des Versands über das Computersystem an die erste Behörde (205), den Spediteur (201) oder den Warenempfänger (203).

5. - System nach Anspruch 1, wobei die Erkennungsvorrichtung (207) ein Fahrzeugkennzeichenerkennungssystem umfasst, umfassend eine Kamera, die ein Bild des Kennzeichens des Trägerfahrzeugs (202) zur Analyse erfasst.

6. - Verfahren, ausgeführt in einem Computersystem, zum Überwachen eines Versands von einem Spediteur (201) zu einem Warenempfänger (203) durch ein Trägerfahrzeug (202), das unter der Aufsicht einer ersten Behörde (205) und einer zweiten Behörde (206) eine Grenze überquert,
wobei das Computersystem konfiguriert ist, um über ein digitales Netz mit den entsprechenden Datenverarbeitungssystemen des Spediteurs (201), des Trägerfahrzeugs (202), des Warenempfängers (203), der ersten Behörde (205) und der zweiten Behörde (206) verbunden zu sein;
wobei die erste Behörde (205) eine Regierungsbehörde ist und die zweite Behörde (206) ein mobiler Patrouillenbeamter ist;
wobei der mobile Patrouillenbeamte in der Lage ist, die Versanddaten von dem Computersystem zu empfangen, wobei der mobile Patrouillenbeamte nach Erhalt einer Anweisung von der ersten Behörde das Trägerfahrzeug (202) verfolgen und an der Weiterfahrt hindern kann;
wobei das Computersystem konfiguriert ist, um über ein digitales Netz mit den entsprechenden Datenverarbeitungssystemen einer Vielzahl von Regierungsbehörden verbunden zu sein, wobei die Vielzahl von Regierungsbehörden über das Computersystem miteinander kommunizieren kann;
das Verfahren umfassend:
Erhalten, durch das Computersystem, von Versanddaten von dem Spediteur (201);
Erhalten, durch das Computersystem, von Versanddaten , die von dem Trägerfahrzeug (202) hochgeladen werden;
Aufzeichnen, durch das Computersystem, eines Kennzeichens;
Erfassen, durch eine Positionierungsvorrichtung (208), die an dem Trägerfahrzeug (202) positioniert ist, der geografischen Position des Trägerfahrzeugs (202);
Erhalten, durch eine Erkennungsvorrichtung (207), die sich an der Grenze befindet, des Kennzeichens des Trägerfahrzeugs (202) und eines Zeitstempels, der die Zeit angibt, zu der das Trägerfahrzeug (202) die Grenze passiert;
Abgleichen des Kennzeichens mit Versanddaten und Anhängen des Zeitstempels an die Versanddaten;
Archivieren, durch das Computersystem, eines Versanddatensatzes nach Erhalt einer Bestätigung von dem Warenempfänger (203);
automatisches Kennzeichnen, durch das Computersystem, von Anomalien unter Verwendung proprietärer Algorithmen künstlicher Intelligenz (KI) / maschinellen Lernens (ML); und Alarmieren der ersten Behörde (205) über die Anomalien;
wobei die Versanddaten jederzeit von der ersten Behörde (205), dem Spediteur (201), dem Trägerfahrzeug (202) und dem Warenempfänger (203) abgerufen werden können, und der Versand für den gesamten Versandprozess überwacht und aufgezeichnet wird,
sodass das Trägerfahrzeug (202) die Grenze überqueren kann, ohne anhalten zu müssen,
wobei die Grenze und die erste Behörde (205) geografisch getrennt sind.

7. - Verfahren nach Anspruch 6, wobei die erste Behörde (205) in der Lage ist, über das Computersystem Anweisungen an das Trägerfahrzeug (202) zu senden, um das Trägerfahrzeug (202) anzuweisen, sich zu einem bestimmten Inspektionspunkt zu bewegen.

8. - Verfahren nach Anspruch 6, wobei die erste Behörde (205) in der Lage ist, dem Spediteur (201) oder dem Trägerfahrzeug (202) eine Vorladung zuzustellen, wenn festgestellt wird, dass diese gegen Regierungsgesetze verstoßen, wobei das Vorladungsdokument in dem Computersystem gespeichert und der zuwiderhandelnden Partei zugestellt wird.

9. - Verfahren nach Anspruch 6, wobei der Warenempfänger (203) zu Folgendem in der Lage ist,
a) Senden einer Lieferanweisung über das Computersystem an das Trägerfahrzeug (202); und
b) Senden einer Empfangsbestätigung des Versands über das Computersystem an die erste Behörde (205), den Spediteur (201) oder den Warenempfänger (203).

## Revendications

1. - Système de suivi d'une expédition expédiée par un expéditeur (201) à un destinataire (203) par un véhicule de transport (202) franchissant une frontière sous la supervision d'une première agence (205) et d'une deuxième agence (206), comprenant :
un dispositif de positionnement (208) positionné sur le véhicule de transport (202) qui indique une position géographique du véhicule de transport (202) pendant l'expédition ;
un dispositif de reconnaissance (207) installé à un emplacement prédéterminé à la frontière pour reconnaître une plaque d'immatriculation et enregistrer un horodatage lorsque le véhicule de transport (202) passe à travers le dispositif de reconnaissance (207) ; et
un système informatique (204) qui est configuré pour s'interconnecter avec les systèmes de traitement de données correspondants de l'expéditeur (201), du véhicule de transport (202), du destinataire (203), de la première agence (205) et de la deuxième agence (206) par un réseau numérique ;
dans lequel la première agence (205) est une agence gouvernementale et la deuxième agence (206) est un agent de patrouille mobile ;
dans lequel l'agent de patrouille mobile est capable de recevoir les données d'expédition du système informatique, dans lequel, sur instruction reçue de la première agence, l'agent de patrouille mobile peut suivre le véhicule de transport (202) et l'empêcher de poursuivre ;
dans lequel le système informatique est configuré pour s'interconnecter avec les systèmes de traitement de données correspondants d'une pluralité d'agences gouvernementales, dans lequel la pluralité d'agences gouvernementales peuvent communiquer entre elles par l'intermédiaire du système informatique ;
dans lequel le système informatique :
reçoit des données d'expédition comprenant :
les données d'expédition provenant de l'expéditeur (201) et du véhicule de transport (202),
la position géographique du véhicule de transport provenant du dispositif de positionnement (208), et
la plaque d'immatriculation et l'horodatage provenant du dispositif de reconnaissance (207) ;
fait correspondre la plaque d'immatriculation avec les données d'expédition et rattache l'horodatage aux données d'expédition ;
stocke les données d'expédition dans un enregistrement d'expédition dans une base de données interne ;
archive l'enregistrement d'expédition à réception d'une confirmation du destinataire (203) ;
signale automatiquement toute anomalie à l'aide d'algorithmes propriétaires d'intelligence artificielle (IA) / d'apprentissage automatique (ML) et alerte la première agence (205) des anomalies ;
dans lequel les données d'expédition peuvent être extraites à tout moment par la première agence (205), l'expéditeur (201), le véhicule de transport (202) et le destinataire (203), et l'expédition est suivie et enregistrée tout au long du processus d'expédition,
de sorte que le véhicule de transport (202) est apte à franchir la frontière sans avoir à s'arrêter,
dans lequel la frontière et la première agence (205) sont géographiquement séparées.

2. - Système selon la revendication 1, dans lequel la première agence (205) est capable d'envoyer des instructions par l'intermédiaire du système informatique au véhicule de transport (202) afin d'ordonner au véhicule de transport (202) de se déplacer à un point d'inspection spécifique.

3. - Système selon la revendication 1, dans lequel la première agence (205) est capable d'émettre une assignation à l'expéditeur (201) ou au véhicule de transport (202) par l'intermédiaire du système informatique (204) s'ils sont reconnus coupables d'une infraction aux lois gouvernementales, le document d'assignation étant stocké dans le système informatique et remis à la partie en infraction.

4. - Système selon la revendication 1, dans lequel le destinataire (203) est capable :
a) d'envoyer une instruction de livraison au véhicule de transport (202) par l'intermédiaire du système informatique ; et
b) d'envoyer une confirmation de réception de l'expédition par l'intermédiaire du système informatique à la première agence (205), à l'expéditeur (201) ou au destinataire (203) .

5. - Système selon la revendication 1, dans lequel le dispositif de reconnaissance (207) comprend un système de reconnaissance de plaque d'immatriculation comprenant une caméra qui capture une image de la plaque d'immatriculation du véhicule de transport (202) pour une analyse.

6. - Procédé exécuté dans un système informatique pour surveiller une expédition d'un expéditeur (201) à un destinataire (203) par un véhicule de transport (202) franchissant une frontière sous la supervision d'une première agence (205) et d'une deuxième agence (206),
dans lequel le système informatique est configuré pour s'interconnecter avec les systèmes de traitement de données correspondants de l'expéditeur (201), du véhicule de transport (202), du destinataire (203), de la première agence (205) et de la deuxième agence (206) par un réseau numérique ;
dans lequel la première agence (205) est une agence gouvernementale et la deuxième agence (206) est un agent de patrouille mobile ;
dans lequel l'agent de patrouille mobile est capable de recevoir les données d'expédition du système informatique, dans lequel, à réception d'une instruction de la première agence, l'agent de patrouille mobile peut suivre le véhicule de transport (202) et l'empêcher de poursuivre ;
dans lequel le système informatique est configuré pour s'interconnecter avec les systèmes de traitement de données correspondants d'une pluralité d'agences gouvernementales, dans lequel la pluralité d'agences gouvernementales peuvent communiquer entre elles par l'intermédiaire du système informatique ;
le procédé comprenant :
la réception, par le système informatique, de données d'expédition provenant de l'expéditeur (201) ;
la réception, par le système informatique, de données d'expédition téléchargées par le véhicule de transport (202) ;
l'enregistrement, par le système informatique, d'une plaque d'immatriculation ;
l'acquisition, par un dispositif de positionnement (208) positionné sur le véhicule de transport (202), de la position géographique du véhicule de transport (202) ;
la réception, depuis un dispositif de reconnaissance (207) situé à la frontière, de la plaque d'immatriculation du véhicule de transport (202) et d'un horodatage indiquant l'heure à laquelle le véhicule de transport (202) franchit la frontière ;
la mise en correspondance de la plaque d'immatriculation avec les données d'expédition et le rattachement de l'horodatage aux données d'expédition ;
l'archivage, par le système informatique, d'un enregistrement d'expédition à réception d'une confirmation du destinataire (203) ;
le signalement, par le système informatique, de toute anomalie automatiquement à l'aide d'algorithmes propriétaires d'intelligence artificielle (IA) / d'apprentissage automatique (ML) ; et
l'alerte de la première agence (205) des anomalies ;
dans lequel les données d'expédition peuvent être extraites à tout moment par la première agence (205), l'expéditeur (201), le véhicule de transport (202) et le destinataire (203), et l'expédition est surveillée et enregistrée tout au long du processus d'expédition,
de sorte que le véhicule de transport (202) est apte à franchir la frontière sans avoir besoin de s'arrêter,
dans lequel la frontière et la première agence (205) sont géographiquement séparées.

7. - Procédé selon la revendication 6, dans lequel la première agence (205) est capable d'envoyer des instructions au véhicule de transport (202) par l'intermédiaire du système informatique afin d'ordonner au véhicule de transport (202) de se déplacer à un point d'inspection spécifique.

8. - Procédé selon la revendication 6, dans lequel la première agence (205) est capable d'émettre une assignation à l'expéditeur (201) ou au véhicule de transport (202) s'ils sont reconnus coupables d'une infraction aux lois gouvernementales, le document d'assignation étant stocké dans le système informatique et remis à la partie en infraction.

9. - Procédé selon la revendication 6, dans lequel le destinataire (203) est capable :
a) d'envoyer une instruction de livraison au véhicule de transport (202) par l'intermédiaire du système informatique ; et
b) d'envoyer une confirmation de réception de l'expédition par l'intermédiaire du système informatique à la première agence (205), à l'expéditeur (201) ou au destinataire (203) .
